# EUROPÄISCHE PATENTSCHRIFT

(11) **EP 2 598 765 B1**
(45) Veröffentlichungstag und Bekanntmachung des Hinweises auf die Patenterteilung: **08.10.2014**
(21) Anmeldenummer: 10739897.6
(22) Anmeldetag: 29.07.2010
(51) Int. Cl.: F16D 41/06

(54) **KLEMMGESPERRE UND VERFAHREN ZU SEINER HERSTELLUNG**
SILENT RATCHET AND METHOD FOR PRODUCING SAME
DISPOSITIF DE BLOCAGE PAR SERRAGE ET SON PROCÉDÉ DE FABRICATION

(43) Veröffentlichungstag der Anmeldung: 05.06.2013
(73) Patentinhaber: Rollax GmbH & Co. Kg, 32107 Bad Salzuflen (DE)
(72) Erfinder: BENJAMIN, Milto, 33334 Gütersloh (DE); KUHLMANN, Michael, 33604 Bielefeld (DE)
(74) Vertreter: Ter Meer Steinmeister & Partner
(86) Internationale Anmeldenummer: PCT/EP2010/061061
(87) Internationale Veröffentlichungsnummer: WO 2012/013234

(56) Entgegenhaltungen:
- WO-A1-01/12428
- US-A1- 2002 148 696
- US-B1- 6 757 975

## Beschreibung

Die Erfindung betrifft ein Klemmgesperre mit mindestens einem Klemmkörper und einem Außenring und einem koaxial darin angeordneten Innenring, die zusammen eine Laufbahn und eine Klemmkontur für den Klemmkörper bilden, wobei der Außenring durch mehrere übereinander gestapelte und fest zusammengehaltene Lamellen gebildet wird.

Ein typisches Beispiel für ein solches Klemmgesperre ist ein Freilauf, bei dem, wenn ein Drehmoment in einer Richtung wirkt, Klemmrollen an der Klemmkontur blockiert werden, so dass das Drehmoment übertragen werden kann, während, wenn das Drehmoment in der entgegengesetzten Richtung wirkt, die Klemmrollen an der Laufbahn abrollen, so dass kein Drehmoment übertragen wird. Außerdem finden Klemmgesperre auch in sogenannten Freilaufbremsen Anwendung, bei denen ein Drehmoment mit Hilfe der Klemmkörper in beiden Richtungen übertragen werden kann, wenn die Krafteinleitung über ein Löseelement erfolgt, während kein Drehmoment übertragen wird, wenn die Krafteinleitung über ein Halteelement erfolgt.

Üblicherweise werden der Innenring und der Außenring jeweils in einem Stück aus Metall hergestellt, und die Klemmkontur wird durch maschinelle Bearbeitung, beispielsweise durch Fräsen der inneren oder äußeren Umfangsfläche eines dieser Metallkörper hergestellt. Zumeist werden die Laufbahnen anschließend gehärtet.

Aus US 2002/148 696 A1 und US 6 757 975 B1 sind Klemmgesperre dieser Art bekannt, bei denen der Außenring durch einen Stapel übereinander gestapelter Lamellen gebildet wird.

DE 10 2006 046 495 A1 beschreibt ein Klemmgesperre, bei dem der Innenring durch zwei Lamellen gebildet wird, zwischen denen als dritte Lamelle ein Schaltrad angeordnet ist, das relativ zu den Lamellen des Innenrings drehbar ist.

Aufgabe der Erfindung ist es, ein Klemmgesperre und ein Herstellungsverfahren anzugeben, die eine kostengünstigere Herstellung ermöglichen.

Diese Aufgabe wird erfindungsgemäß dadurch gelöst, dass der Außenring und der Innenring jeweils durch mehrere übereinander gestapelte und fest zusammengehaltene Lamellen gebildet werden.

Für die Herstellung dieses Klemmgesperres ist keine kostspielige maschinelle Bearbeitung von Metallteilen erforderlich, sondern der Innenring und der Außenring werden einfach dadurch gebildet, dass mehrere Lamellen in der Form flacher Stahlbleche übereinander gestapelt werden. Die Lamellen mit der gewünschten Klemmkontur lassen sich kostengünstig herstellen, beispielsweise durch Stanzen, und wenn die Lamellen in der vorgesehenen Position miteinander verklebt oder formschlüssig verriegelt sind, bilden die Kanten der einzelnen Lamellen zusammen die Klemmkontur. Die Lamellen des Innenrings und des Außenrings lassen sich mit geringem Materialverbrauch herstellen, indem das Stahlblech, das bei der Herstellung der ringförmigen Lamelle für den Außenring aus der Mitte dieser Lamelle ausgestanzt wird, als Rohling für die entsprechende Lamelle des Innenrings verwendet wird.

Das erfindungsgemäße Herstellungsverfahren hat auch den Vorteil, dass verschiedene Klemmgesperre, die für unterschiedliche Belastungen ausgelegt sind, in rationeller Weise hergestellt werden können, indem einfach die Anzahl der übereinander gestapelten Lamellen variiert wird.

Vorteilhafte Ausgestaltungen der Erfindung sind in den Unteransprüchen angegeben.

Die formschlüssige Verriegelung der Lamellen kann beispielsweise mittels durchgesteckter Stifte erreicht werden oder mit Hilfe von aus der Fläche der Lamellen herausgedrückten Warzen, die in entsprechende Vertiefungen der jeweils benachbarten Lamelle eingreifen.

Bei einer Freilaufbremse ist zusätzlich ein Löseelement erforderlich, das mit Klauen in die Laufbahn zwischen dem Innenring und dem Außenring ragt und dazu dient, die Klemmkörper in eine nicht klemmende Position zu drücken. Die Erfindung bietet dann die vorteilhafte Möglichkeit, das Löseelement durch eine oder mehrere Scheiben zu bilden, die zwischen den Lamellen liegen. Dadurch wird die Herstellung des Löseelements vereinfacht und zugleich eine günstige Kräfteverteilung erreicht.

Wenn der Innenring auf eine Welle aufgekeilt werden soll, ermöglicht die Erfindung eine kostengünstige Herstellung der Keilstrukturen an der inneren Umfangsfläche des Innenrings, da diese Strukturen bereits beim Stanzen der Lamellen hergestellt werden können.

In EP 0 743 221 A2 wird ein Verstellmechanismus für Kraftfahrzeugsitze beschrieben, der durch zwei hintereinandergeschaltete Freilaufbremsen gebildet wird. Der Außenring der ersten Freilaufbremse kann mit Hilfe eines Betätigungshebels wahlweise in der einen oder anderen Richtung aus einer Neutralposition heraus gedreht werden. Dabei wird das Drehmoment durch die Klemmkörper auf den Innenring übertragen, der seinerseits das Löseelement sowie ein Abtriebselement der zweiten Freilaufbremse antreibt. Die Drehung des Abtriebselements bewirkt dann die Verstellung des Kraftfahrzeugsitzes, beispielsweise eine Neigungsverstellung der Rückenlehne oder auch eine Sitzhöhenverstellung. Das Löseelement der ersten Freilaufbremse ist von einer Rückstellfeder beaufschlagt. Wenn der Betätigungshebel losgelassen wird, sorgt diese Rückstellfeder für die Rückstellung des Betätigungshebels, während der Innenring der ersten Freilaufbremse und die Komponenten der zweiten Freilaufbremse in der erreichten Stellung verbleiben. Wenn ein Drehmoment auf das Abtriebselement wirkt, geht die zweite Freilaufbremse in Hemmung, so dass das Abtriebselement am Gehäuse verriegelt wird. Auf diese Weise wird das zu verstellende Bauteil des Sitzes in der eingestellten Position arretiert.

Die Erfindung erlaubt eine besonders kompakte Bauweise eines solchen Verstellmechanismus. Vorzugsweise sind dabei die Innen- und Außenringe beider Freilaufbremsen aus Lamellen aufgebaut. Die Lamellen des Innenrings der ersten Freilaufbremse werden dann nicht nur miteinander, sondern auch mit dem Löseelement der zweiten Freilaufbremse zu einem Paket verbunden. Das Abtriebselement wird vorzugsweise durch eine Welle gebildet, die drehfest mit dem Innenring der zweiten Freilaufbremse verkeilt ist. Auch das Löseelement der zweiten Freilaufbremse und die Lamellen des Innenrings der ersten Freilaufbremse können über Keilnuten mit der Welle in Eingriff stehen, jedoch mit einem gewissen Spiel, so dass eine begrenzte Verdrehung des Löseelements relativ zur Welle möglich ist. Diese Verdrehung ist notwendig, damit die Klemmkörper der zweiten Freilaufbremse während des Verstellvorgangs in der nicht klemmenden Position gehalten werden können. Sobald das Spiel aufgebraucht ist, wird die Welle, also das Abtriebselement, direkt durch das Löseelement und den Innenring der ersten Freilaufbremse angetrieben. Dies ermöglicht eine stabile Übertragung hoher Drehmomente sowie eine sichere Führung der Welle.

Im folgenden werden Ausführungsbeispiele der Erfindung anhand der Zeichnung näher erläutert.

Es zeigen:
- Fig. 1: eine perspektivische Ansicht eines erfindungsgemäßen Klemmgesperres;
- Fig. 2: einen schematischen Schnitt durch einen Lamellenstapel in dem Klemmgesperre nach Fig. 1;
- Fig. 3: einen horizontalen Schnitt durch ein Klemmgesperre gemäß einem weiteren Ausführungsbeispiel;
- Fig. 4: einen Schnitt durch das Klemmgesperre nach Fig. 3 in einer anderen Schnittebene;
- Fig. 5: einen vertikalen Schnitt durch das Klemmgesperre nach Fig. 3 und 4;
- Fig. 6: einen Grundriss zweier Lamellen, zur Illustration eines Verfahrens zur Herstellung des Klemmgesperres;
- Fig. 7: einen axialen Schnitt durch einen Verstellmechanismus mit Klemmgesperren gemäß einem weiteren Ausführungsbeispiel der Erfindung; und
- Fig. 8: einen Schnitt längs der Linie VIII-VIII in Fig. 7.

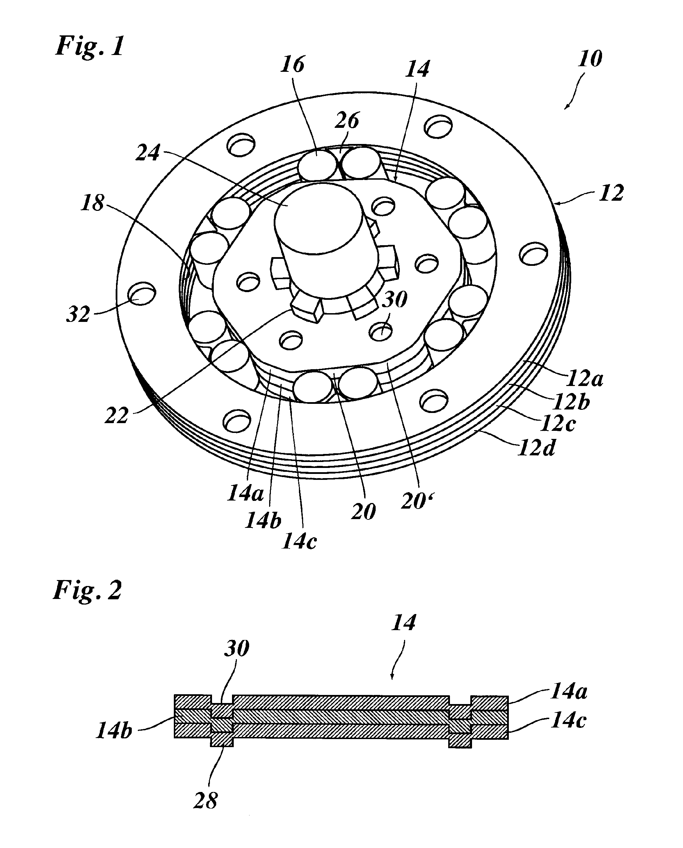

In Fig. 1 ist als Beispiel für ein Klemmgesperre eine Freilaufbremse 10 dargestellt, die einen Außenring 12, einen Innenring 14 und mehrere paarweise zwischen Innen- und Außenring angeordnete Klemmkörper 16 aufweist, die hier als Klemmrollen ausgebildet sind. Die kreiszylindrische Innenfläche des Außenrings 12 bildet eine Laufbahn 18 für die Klemmkörper. Die äußere Umfangsfläche des Innenrings 14 bildet eine weitere Laufbahn 20 für die Klemmkörper. Diese Laufbahn 20 ist jedoch nicht kreisförmig, sondern bildet eine Klemmkontur 20' mit radial nach außen weisenden Erhebungen, die das Lichtmaß des ringförmigen Spaltes zwischen Innen- und Außenring auf einen Wert verringern, der kleiner ist als der Durchmesser der Klemmrollen.

Der Innenring 14 ist drehfest auf Keile 22 einer Welle 24 aufgekeilt. Als Beispiel soll angenommen werden, dass das Klemmgesperre 10 Teil eines Sitzverstellers, z. B. eines Sitzhöhenverstellers für einen Kraftfahrzeugsitz ist. Die Welle 24 ist dann direkt oder über ein nicht gezeigtes Getriebe mit dem Höhenverstellmechanismus verbunden, so dass eine Drehung der Welle 24 eine Höhenverstellung der Sitzes bewirkt. Wenn auf den Sitz eine äußere Kraft ausgeübt wird, beispielsweise durch den Körper des Fahrzeuginsassen, so wirkt auf die Welle 24 ein Drehmoment, das die Tendenz hat, diese zusammen mit den Innenring 14 zu verdrehen. Dabei treten jedoch unabhängig von der Drehrichtung jeweils sechs der insgesamt zwölf Klemmkörper 16 in den enger werdenden Bereich des Spaltes zwischen Innen- und Außenring ein, so dass durch Klemmwirkung der Innenring 14 an dem Außenring 12 blockiert wird. Auf diese Weise wird eine Drehung der Welle 24 verhindert und somit der Sitz in der jeweils eingestellten Position gehalten.

Die Klemmkörper 16 bilden insgesamt sechs Paare, und zwischen den Klemmkörpern jedes Paares ist ein elastischer Distanzkörper 26 angeordnet.

Zu der Freilaufbremse 10 gehört weiterhin ein in Fig. 1 nicht gezeigtes Löseelement, das drehbar auf der Welle 24 sitzt, jedoch mit geringem Spiel mit den Keilen 22 in Eingriff steht, so dass es über einen kleinen Winkel gegenüber dem Innenring 14 verdreht werden kann. Dieses Löseelement greift mit Klauen in die Zwischenräume zwischen den einzelnen Paaren der Klemmkörper 16 ein.

Wenn nun die Höhe des Sitzes aktiv verstellt werden soll, so wird mit Hilfe eines nicht gezeigten Antriebsmechanismus ein Drehmoment auf das Löseelement ausgeübt. Die geringe Verdrehung dieses Löseelements gegenüber dem Innenring 14 hat zur Folge, dass die Klauen auf jeweils einen der beiden Klemmkörper 16 jedes Paares drücken und den Distanzkörper 26 komprimieren. Dadurch wird der von der Klaue beaufschlagte Klemmkörper daran gehindert, tiefer in den sich verengenden Teil des Spaltes zwischen Innenring und Außenring einzutreten und eine Klemmwirkung auszuüben. Bei fortgesetzter Drehung des Löseelements wird dann durch die Welle 24 der Innenring 14 mitgenommen. Da die Klauen nun ein Hemmen des Klemmgesperres verhindern, werden das Löseelement, der Innenring 14 und die Welle 24 in der gewünschten Richtung gedreht, so dass der Sitz in der Höhe verstellt wird. Die Klemmkörper 16 rollen dabei an der Laufbahn 16 des stationären Außenrings 12 ab. Wenn kein Drehmoment mehr auf das Löseelement wirkt, ist der Sitz in der neu eingestellten Position blockiert.

Die Besonderheit des hier beschriebenen Klemmgesperres besteht darin, dass der Innenring 14 nicht durch einen massiven Metallkörper gebildet wird, sondern durch einen Stapel von flachen, scheibenförmigen Lamellen 14a-14c aus Stahlblech. Die Klemmkontur 20' wird somit durch die miteinander bündigen Kanten der Lamellen 14a-14c gebildet. Entsprechend ist im gezeigten Beispiel auch der Außenring 12 aus einem Stapel aus Lamellen 12a-12d aufgebaut. Durch diese Bauweise wird die Herstellung des Innenrings und des Außenrings erheblich vereinfacht. Beispielsweise können die Lamellen des Innenrings und des Außenrings einfach mit der gewünschten Kontur aus einem Stahlblech geeigneter Dicke ausgestanzt werden. Die ausgestanzten Lamellen werden dann übereinander gestapelt und gehärtet, so dass verformungssteife Laufbahnen für die Klemmkörper 16 gebildet werden.

Damit sich die Lamellen 14a-14c des Innenrings 14 nicht gegeneinander verdrehen oder verschieben, sind aus der Fläche jeder Lamelle mehrere Warzen 28 herausgedrückt, wie in der Schnittdarstellung in Fig. 2 zu erkennen ist. Auf der entgegengesetzten Seite jeder Lamelle entsteht dabei eine der Warze 28 entsprechende Vertiefung 30. Wenn die Lamellen in der in Fig. 2 gezeigten Weise übereinander gestapelt werden, greifen die Warzen 28 jeweils in die Vertiefung 30 der benachbarten Lamelle ein, so dass die Lamellen formschlüssig miteinander verriegelt werden. In entsprechender Weise werden auch die Lamellen 12a-12d des Außenrings 12 durch Warzen (nicht erkennbar) und entsprechende Vertiefungen 32 formschlüssig verriegelt.

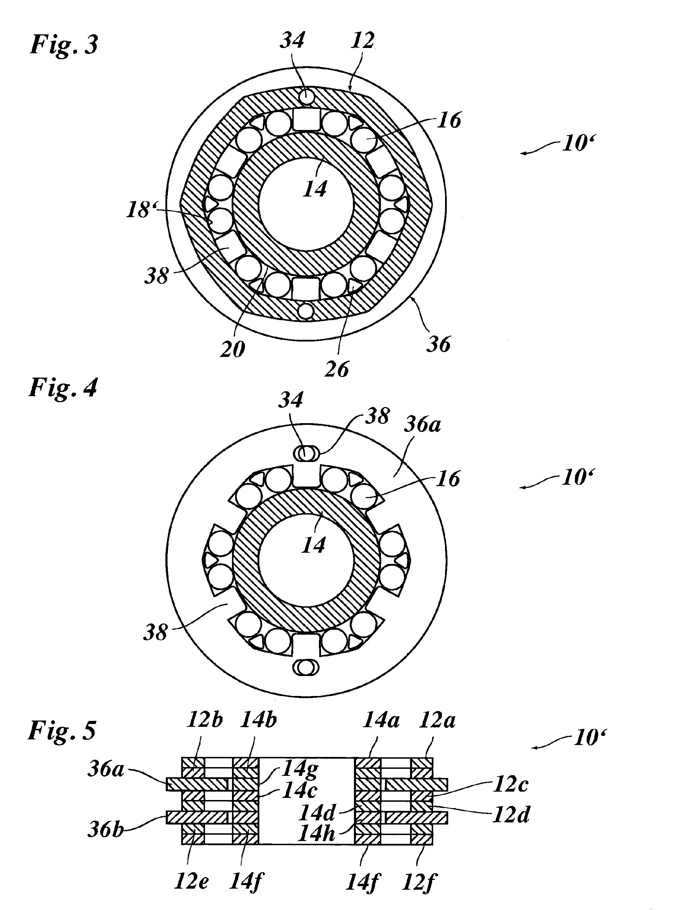

Fig. 3 zeigt einen Schnitt durch ein Klemmgesperre 10' gemäß einem anderen Ausführungsbeispiel. In diesem Beispiel bildet die innere Laufbahn des Außenrings 12 eine nicht kreisförmige Klemmkontur 18', während der Innenring 14 eine kreisförmige Laufbahn 20 bildet. Auch hier sind der Außenring 12 und der Innenring 14 aus Lamellen aufgebaut, und jeweils eine dieser Lamellen ist in Fig. 3 im Schnitt dargestellt. Die formschlüssige Verriegelung der Lamellen des Außenrings 12 erfolgt in diesem Beispiel mit Hilfe von Stiften 34, die durch miteinander fluchtende Bohrungen der Lamellen hindurchgesteckt sind.

In Fig. 3 ist außerdem ein Löseelement 36 des Klemmgesperres 10' dargestellt, und man erkennt Klauen 38 dieses Löseelements in den Zwischenräumen zwischen den Klemmkörpern 16.

Der lamellenartige Aufbau des Außenrings 12 erlaubt auch eine neuartige Gestaltung des Löseelements 36. Während solche Löseelemente bisher als topfförmige Elemente ausgebildet sind, die mit axial vorspringenden Klauen in den Zwischenraum zwischen Innenring und Außenring eingreifen, wird das Löseelement 36 in dem hier beschriebenen Ausführungsbeispiel durch eine oder mehrere Scheiben 36a, 36b (im gezeigten Beispiel zwei) gebildet, die zwischen den einzelnen Lamellen des Außenrings liegen. In Fig. 4 ist die Schnittebene so gewählt, dass man auf eine Scheibe 36a blickt. Fig. 5 zeigt den Schichtaufbau des gesamten Klemmgesperres 10'. Der Außenring ist in diesem Beispiel aus sechs Lamellen 12a-12f aufgebaut und der Innenring umfasst sechs Lamellen 14a-14f, die jeweils auf gleicher Höhe wie die entsprechenden Lamellen des Außenrings liegen, sowie zusätzlich zwei Lamellen 14g,14h, die in ihrer Lage und Dicke den Scheiben 36a, 36b des Löseelements 36 entsprechen.

Die Scheiben 36a, 36b des Löseelements sind gleichmäßig über die gesamte Höhe des Klemmgesperres 10' verteilt, und die Klauen 38 sind direkt am inneren Rand der Scheiben ausgebildet, so dass sie über einen kurzen Hebelarm auf die Klemmkörper 16 wirken können, ohne dass nennenswerte Biegemomente an den Klauen auftreten.

Damit eine Verdrehung des Löseelements 36 relativ zu dem Außenring 12 ermöglicht wird, weisen die Scheiben 36a, 36b jeweils Langlöcher 38 auf (Fig. 4), die die Stifte 34 aufnehmen.

Aus Lamellen, die mit den Lamellen 12a-12d und 14a-14c in Fig. 1 und 2 oder den Lamellen 12a-12f und 14a-14h in Fig. 5 identisch sind, lassen sich Innen- und Außenringe unterschiedlicher Dicke aufbauen, so dass auf rationelle Weise verschiedene Typen von Klemmgesperren hergestellt werden können, die unterschiedlichen Belastungsanforderungen genügen. Bei dem in Fig. 3 bis 5 gezeigten Ausführungsbeispiel kann auch die Anzahl der Scheiben des Löseelements 36 variiert werden.

Typischerweise ist bei einem Klemmgesperre entweder der Innenring oder der Außenring starr an einem Gehäuseteil befestigt. Auch diese Befestigung kann mit Hilfe der in Fig. 2 gezeigten Warzen 28 oder in Fig. 3 gezeigten Stifte 34 auf einfache Weise realisiert werden. Entsprechend können auch die Scheiben des Löseelements 36 durch Stifte zusammengehalten werden. Wahlweise kann dieser Zusammenhalt jedoch auch durch den Antriebsmechanismus bewirkt werden. Beispielsweise können die äußeren Umfangsränder der Scheiben 36a, 36b als Zahnkränze gestaltet werden, die mit einem nicht gezeigten Antriebsritzel kämmen.

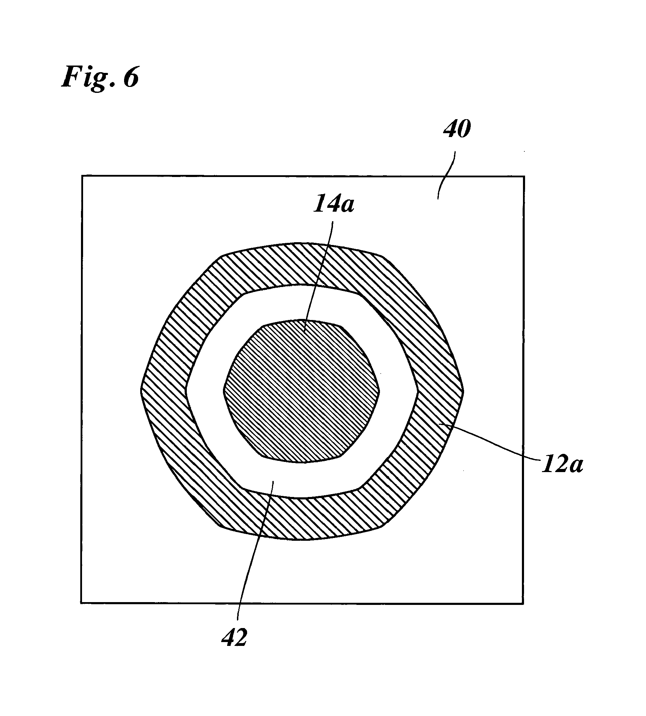

Fig. 6 illustriert ein Verfahren, mit dem die Lamellen für Innen- und Außenringe des Klemmgesperres mit geringem Verschnitt aus einem ebenen Stahlblech 40 ausgestanzt werden können. Im gezeigten Beispiel wird aus dem Stahlblech eine Lamelle 12a für einen Außenring eines Klemmgesperres des in Fig. 1 und 2 oder des in Fig. 3 bis 5 gezeigten Typs ausgestanzt. Im Inneren dieser Lamelle 12a bleibt dann ein annähernd kreisförmiges Stück Blech zurück, das als Rohling 42 zum Ausstanzen einer Lamelle 14a für einen Innenring desselben oder eines anderen Klemmgesperres dient. Die Lamellen 12a und 14a können dabei in einem einzigen Stanzschritt oder wahlweise in zwei separaten Schritten gestanzt werden. Wenn Klemmgesperre mit unterschiedlichen Durchmessern hergestellt werden sollen, können auch mehr als zwei Ringe in dieser Weise ineinandergeschachtelt ausgestanzt werden.

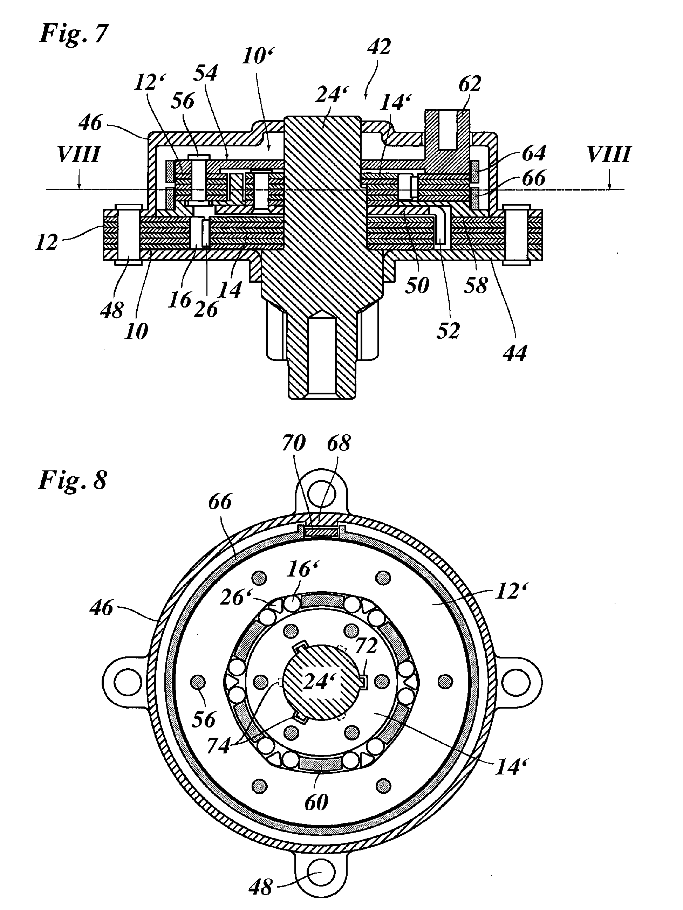

Fig. 7 zeigt einen Verstellmechanismus, beispielsweise einen Sitzhöhenversteller für Kraftfahrzeuge. Dieser Verstellmechanismus weist zwei hintereinandergeschaltete Klemmgesperre 10, 10' auf, die jeweils als Freilaufbremsen ausgebildet und in einem gemeinsamen Gehäuse untergebracht sind. Das Gehäuse weist eine Grundplatte 44 und einen Deckel 46 auf, die durch Nieten 48 zusammengehalten sind. Die Lamellen des Außenrings 12 des Klemmgesperres 10 sind zwischen der Grundplatte 44 und dem Deckel 46 eingefügt und werden durch die Niete 48 drehbar im Gehäuse fixiert. Die Lamellen des Innenrings 14 des Klemmgesperres 10 sind drehfest auf eine Welle 24' aufgekeilt, die drehbar im Gehäuse gelagert ist. Die Klemmkontur wird ähnlich wie in Fig. 1 durch die Außenfläche des Innenrings 14 gebildet.

Ein Löseelement 50 des Klemmgesperres 10 hat die Form einer flachen Scheibe, die ebenfalls auf die Welle 24' aufgekeilt ist, jedoch relativ zu dieser Welle in Drehrichtung etwas Spiel hat. Am äußeren Umfangselement weist das Löseelement Klauen 52 auf, die in den Ringspalt zwischen Innen- und Außenring des Klemmgesperres 10 eingreifen.

Der Innenring 14' des Klemmgesperres 10' wird durch einen Stapel von Lamellen gebildet, die auf dem Löseelement 50 aufliegen und durch Niete (ohne Bezugszeichen) mit dem Löseelement 50 und miteinander zusammengehalten sind. Die in Fig. 7 unteren Lamellen des Innenrings 14' stehen über Nuten mit den Keilen der Welle 24' in Eingriff, so dass sie ebenso wie das Löseelement 50 nur mit begrenztem Spiel relativ zu der Welle drehbar sind. Die oberen Lamellen befinden sich oberhalb der Keile der Welle 24' und liegen satt an der Umfangsfläche eines zylindrischen Abschnitts der Welle 24' an, so dass die Welle präzise geführt wird.

Der Außenring 12' des Klemmgesperres 10' bildet die Klemmkontur dieses Klemmgesperres usd ist aus Lamellen aufgebaut, auf denen ein Hebeladapter 54 aufliegt. Die Lamellen und der Hebeladapter 54 werden durch Niete 56 zusammengehalten.

Zwischen den Lamellen des Außenrings 12' des Klemmgesperres 10' und dem Löseelement 50 des Klemmgesperres 10 ist ein Löseelement 58 des Klemmgesperres 10' eingefügt. Dieses Löseelement weist am innern Umfang aufragende Klauen 60 (Fig. 8) auf, die in den Ringspalt zwischen Innenring und Außenring des Klemmgesperres 10' eingreifen. Um eine besonders kompakte Bauweise zu ermöglichen, sind die unteren Köpfe der Nieten 56 in kreisbogenförmigen Langlöchern des Löseelements 58 aufgenommen.

Der Hebeladapter 54 weist Schraubdome 62 auf, die kreisbogenförmige Langlöcher des Deckels 46 durchgreifen und die Befestigung eines nicht gezeigten Betätigungshebels ermöglichen.

In Fig. 8 ist die Anordnung von Klemmkörpern 16' und Distanzkörpern 26' des Klemmgesperres 10' zwischen den Lamellen des Innenrings 14' und den Lamellen des Außenrings 12' des Klemmgesperres 10' zu erkennen, ebenso sieht man die Klauen 60 des Löseelements 58.

Der Außenring des Klemmgesperres 10' ist von zwei ringförmigen Schlossfedern 64, 66 umgeben (die Schlossfeder 64 ist nur in Fig. 7 zu sehen). Wie Fig. 8 zeigt, sind die Enden der Schlossfeder 66 einerseits an einem Ansatz 68 an der Innenfläche des Deckels 46 und andererseits an einem Ansatz 70 festgelegt, der von dem Löseelement 58 aufragt. In entsprechender Weise sind die Enden der Schlossfeder 64 an dem gehäusefesten Ansatz 68 sowie an einem nicht gezeigten Ansatz des Hebeladapters 54 festgelegt.

Im folgenden soll die Funktionsweise des Verstellmechanismus 42 erläutert werden.

Die Schlossfeder 64 hält den Hebeladapter 54 und den daran befestigten Betätigungshebel in einer Neutralstellung. Wenn der Betätigungshebel in der einen oder anderen Richtung aus der Neutralstellung herausgeschwenkt wird, so dreht sich der Hebeladapter 54 um die Welle 24' und nimmt dabei den Außenring des Klemmgesperres 10' mit. Die Klemmkörper 16' bewirken eine Hemmung des Klemmgesperres 10', so dass auch der Innenring 14' dieses Klemmgesperres gedreht wird. An dieser Drehung nimmt auch das Löseelement 50 des Klemmgesperres 10 teil, und die Klauen 52 dieses Löseelements bewirken die Entsperrung des in Fig. 7 unteren Klemmgesperres 10.

In Fig. 8 sind drei Keile 74 der Welle 24' im Schnitt dargestellt. Diese Keile greifen mit Spiel in entsprechende Keilnuten 72 der Lamellen des Innenrings 14' ein. Sobald der Innenring 14' geringfügig gedreht worden sind, wird daher auch die Welle 24' in Drehrichtung mitgenommen.

Bei der Drehung des Innenrings und des Außenrings des oberen Klemmgesperres 10' wird auch dessen Löseelement 58 entgegen der Rückstellkraft der Schlossfeder 66 mitgenommen. Das Drehmoment wird dabei von den Lamellen des Außenrings 14' über die Klemmkörper 16' und die Distanzkörper 26' auf die Klauen 60 des Löseelements 58 übertragen.

Wenn nun der Betätigungshebel losgelassen wird, drückt die Schlossfeder 66 auf den Ansatz 70 und stellt das Löseelement 58 in Richtung auf die Neutralstellung zurück. Durch das Löseelement wird dabei das Klemmgesperre 10' entsperrt. Der Innenring 14' bleibt daher in der erreichten Position, und der Außenring, der Hebeladapter 54 und der Betätigungshebel kehren allein in die Neutralstellung zurück. Die Rückstellbewegung des Hebeladapters wird dabei zusätzlich durch die Schlossfeder 64 unterstützt. Obgleich der Hebeladapter 54 und das Paket der Lamellen des Außenrings 12' geringfügig gegenüber dem Löseelement 58 verdrehbar sind, wird so der Betätigungshebel stabil in der Neutralstellung gehalten.

Die Welle 24' weist in Höhe des unteren Klemmgesperres 10' drei zusätzliche Keile 74 auf, die in Fig. 8 gestrichelt angedeutet sind. Durch diese Keile ist die Welle 24' spielfrei mit dem Innenring des Klemmgesperres 10 verkeilt. Wenn bei Belastung des Sitzes ein Drehmoment auf die Welle 24' wirkt, so wird dieses Drehmoment folglich auf den Innenring des Klemmgesperres 10 übertragen. Da das zugehörige Löseelement 50 jedoch drehmomentfrei ist, bewirken die Klemmkörper 16 des Klemmgesperres 10 eine Hemmung, so dass die Welle 24' sicher am Außenring 12 des Klemmgesperres 10 und damit am Gehäuse blockiert wird.

Mit Hilfe des Verstellmechanismus 42 kann somit der Fahrzeugsitz durch mehrmaliges "Pumpen" mit dem Betätigungshebel in jeder gewünschten Richtung verstellt und dann sicher in der erreichten Position arretiert werden.

## Patentansprüche

1. Klemmgesperre mit mindestens einem Klemmkörper (16; 16') und einem Außenring (12; 12') und einem koaxial darin angeordneten Innenring (14; 14'), die zusammen eine Laufbahn (20; 18) und eine Klemmkontur (20'; 18') für den Klemmkörper (16; 16') bilden, wobei der Außenring (12; 12') durch mehrere übereinander gestapelte und fest zusammengehaltene Lamellen (12a-12f) gebildet wird, **dadurch gekennzeichnet, dass** auch der Innenring (14) durch mehrere übereinander gestapelte und fest zusammengehaltene Lamellen (14a-14h) gebildet wird.

2. Klemmgesperre nach Anspruch 1, bei dem jeweils die auf gleicher Höhe liegenden Lamellen des Innenrings und des Außenrings die gleiche Dicke haben.

3. Klemmgesperre nach Anspruch 1 oder 2, bei dem die Lamellen (12a-12f; 14a-14h) formschlüssig miteinander verriegelt sind.

4. Klemmgesperre nach Anspruch 3, bei dem die Lamellen (12a-12d; 14a-14c) zueinander komplementäre Warzen (28) und Vertiefungen (30; 32) zur formschlüssigen Verriegelung der Lamellen aufweisen.

5. Klemmgesperre nach Anspruch 3, bei dem die Lamellen (12a-12f) mittels durchgesteckter Stifte (34) formschlüssig verriegelt sind.

6. Klemmgesperre nach einem der Ansprüche 1 bis 5, bei dem die Klemmkontur (20') an der Außenfläche des aus Lamellen (14a-14c) gebildeten Innenrings (14) ausgebildet ist.

7. Klemmgesperre nach einem der Ansprüche 1 bis 5, bei dem die Klemmkontur (18') an der Innenfläche des aus Lamellen (12a-12f) aufgebauten Außenrings (12) ausgebildet ist.

8. Klemmgesperre nach einem der vorstehenden Ansprüche, in der Form einer Freilaufbremse mit einem Löseelement (36; 50; 58), das mit Klauen (38; 52; 60) in Zwischenräume zwischen mehreren Klemmkörpern (16; 16') eingreift.

9. Klemmgesperre nach Anspruch 8, bei dem das Löseelement (36) durch eine oder mehrere Scheiben (36a, 36b) gebildet wird, die zwischen den Lamellen (12a-12f) des Außenrings liegen.

10. Klemmgesperre nach einem der vorstehenden Ansprüche, bei dem die Lamellen des Innenrings (14; 14') an der inneren Umfangsfläche Keilnuten (72) aufweisen, die mit Keilen (22; 74) einer den Innenring durchsetzenden Welle (24; 24') in Eingriff stehen.

11. Verfahren zur Herstellung eines Klemmgesperres nach einem der vorstehenden Ansprüche, **dadurch gekennzeichnet, dass** die Lamellen (12a-12f; 14a-14h) aus Blech gestanzt werden und dass ein Blechstück, das beim Stanzen im Inneren einer ringförmigen Lamelle (12a) zurückbleibt, als Rohling (42) zum Ausstanzen einer weiteren Lamelle (14a) für dasselbe Klemmgesperre oder ein Klemmgesperre mit anderen Abmessungen genutzt wird.

12. Verstellmechanismus für Kraftfahrzeugsitze, **gekennzeichnet durch** zwei hintereinander geschaltete Klemmgesperre (10; 10'), die jeweils nach Anspruch 8 ausgebildet sind.

13. Verstellmechanismus nach Anspruch 12, bei dem die Lamellen (12') des ersten Klemmgesperres (10') auf dem Löseelement (50) des zweiten Klemmgesperres (10) aufliegen und drehfest miteinander und mit diesem Löseelement verbunden sind.

14. Verstellmechanismus nach Anspruch 13, bei dem die Klemmgesperre (10, 10') in einem gemeinsamen Gehäuse (44, 46) untergebracht sind, in dem eine Welle (24') drehbar gelagert ist, die die Innenringe (14, 14') beider Klemmgesperre durchsetzt und drehfest mit dem Innenring (14) des zweiten Klemmgesperres (10) verbunden ist.

15. Verstellmechanismus nach Anspruch 14, bei dem das Löseelement (50) des zweiten Klemmgesperres (10) und zumindest einige der Lamellen des Innenrings (12') des ersten Klemmgesperres (10') über Keilnuten (72) und Keile (74) derart mit der Welle (24') in Eingriff stehen, dass sie innerhalb eines begrenzten Winkelbereiches relativ zu der Welle (24') verdrehbar sind.

16. Verstellmechanismus nach einem der Ansprüche 12 bis 15, bei der der Außenring (12') des ersten Klemmgesperres (10) drehfest mit einem Hebeladapter (54) verbunden und durch eine erste Rückstellfeder (64) elastisch in einer Neutralposition gehalten ist, während das Löseelement (58) dieses Klemmgesperres durch eine zweite Rückstellfeder (66) elastisch in der Neutralposition gehalten ist.

## Claims

1. A silent ratchet comprising at least one clamping element (16; 16') and an outer ring (12; 12') and an inner ring (14; 14') arranged coaxially in the outer ring, said inner and outer rings together forming a raceway (20; 18) and a clamping contour (20'; 18') for the clamping element (16; 16'), **characterized in that** the outer ring (12; 12') and the inner ring (14; 14') are each formed by a plurality of lamella (12a-12f; 14a-14h) stacked one over the other and rigidly held together.

2. The silent ratchet according to claim 1, wherein the respective lamella of the inner ring and the outer ring that are level with one another have the same thickness.

3. The silent ratchet according to claim 1 or 2, wherein the lamella (12a-12f; 14a-14h) are form-fittingly locked at one another.

4. The silent ratchet according to claim 3, wherein the lamella (12a-12d; 14a-14c) have bosses (28) and depressions (30; 32) complementary thereto for the form-fitting lock of the lamella.

5. The silent ratchet according to claim 3, wherein the lamellar (12a-12f) are form-fittingly locked together by means of pins (34) passing therethrough.

6. The silent ratchet according to any of the claim 1 to 5, wherein the clamping contour (20') is formed at the external peripheral surface of the inner ring (14) formed by the lamella (14a-14c).

7. The silent ratchet according to any of the claims 1 to 5, wherein the clamping contour (18') is formed at the inner peripheral surface of the outer ring (12) formed by the lamella (12a-12f).

8. The silent ratchet according to any of the preceding claims, configured as a freewheel brake having a release element (36; 50; 58) comprising claws (38; 52; 60) that engage in interstices between a plurality of clamping elements (16; 16').

9. The silent ratchet according to claim 8, wherein the release element (36) is formed by one or more disks (36a, 36b) interposed between the lamella (12a-12f) of the outer ring.

10. The silent ratchet according to any of the preceding claims, wherein the lamella of the inner ring (14; 14') have key grooves (72) at their inner peripheral surface held in engagement with keys (22; 74) of a shaft (24; 24') that passes through the inner ring.

11. A method of manufacturing a silent ratchet according to any of the preceding claims, **characterized in that** the lamella (12a-12f; 14a-14h) are punched from sheet metal, and **in that** a piece of sheet metal that remains inside an annular lamella (12a) when the same is punched-out is used as a blank (42) for punching another lamella (14a) for the same silent ratchet or a silent ratchet with different dimensions.

12. An adjusting mechanism for vehicle seats, **characterized by** two concatenated silent ratchet mechanisms (10; 10'), each of which is configured according to claim 8.

13. The adjusting mechanism according to claim 12, wherein the lamella (12') of a first silent ratchet mechanism (10') are superposed on the release element (50) of the second silent ratchet mechanism (10) and are co-rotatably connected to one another and to this release element.

14. The adjusting mechanism according to claim 13, wherein the silent ratchet mechanisms (10; 10') are accommodated in a common casing (44, 46) which rotatably supports a shaft (24') that penetrates the inner rings (14; 14') of both silent ratchet mechanisms and is locked against rotation at the inner ring (14) of the second silent ratchet mechanism (10).

15. The adjusting mechanism according to claim 14, wherein the release element (50) of the second silent ratchet mechanism (10) and at least some of the lamella of the inner ring (12') of the first silent ratchet mechanism (10') are held in engagement with the shaft (24') via keys (74) and key grooves (72) such that they are rotatable relative to the shaft (24') within a limited angular range.

16. The adjusting mechanism according to any of the claims 12 to 15, wherein the outer ring (12') of the first silent ratchet mechanism (10) is non-rotatably connected to a lever adapter (54) and elastically held in a neutral position by a first return spring (64) whereas the release element (58) of this silent ratchet mechanism is elastically held in the neutral position by a second return spring (66).

## Revendications

1. Dispositif d'encliquetage par serrage comportant au moins un corps de serrage (16 ; 16') et une bague extérieure (12 ; 12') et une bague intérieure (14 ; 14') agencée coaxialement dans celle-ci, lesquelles bagues forment conjointement un chemin de roulement (20 ; 18) et un contour de serrage (20' ; 18') pour le corps de serrage (16 ; 16'), dans lequel la bague extérieure (12 ; 12') est formée par plusieurs lamelles (12a-12f) empilées les unes au-dessus des autres et fixement maintenues ensemble, **caractérisé en ce que** la bague intérieure (14) est régalement formée par plusieurs lamelles (14a-14h) empilées les unes au-dessus des autres et fixement maintenues ensemble.

2. Dispositif d'encliquetage par serrage selon la revendication 1, dans lequel les lamelles respectives de la bague intérieure et de la bague extérieure situées à la même hauteur ont la même épaisseur.

3. Dispositif d'encliquetage par serrage selon la revendication 1 ou 2, dans lequel les lamelles (12a-12f ; 14a-14h) sont bloquées les unes avec les autres par complémentarité de formes.

4. Dispositif d'encliquetage par serrage selon la revendication 3, dans lequel les lamelles (12a-12d ; 14a-14c) comportent des bossages complémentaires les uns des autres (28) et des évidements (30 ; 32) pour un blocage des lamelles par complémentarité de formes.

5. Dispositif d'encliquetage par serrage selon la revendication 3, dans lequel les lamelles (12a-12f) sont bloquées par complémentarité de formes au moyen de goupilles (34) passées à travers celles-ci.

6. Dispositif d'encliquetage par serrage selon l'une des revendications 1 à 5, dans lequel le contour de serrage (20') est formé sur la surface extérieure de la bague intérieure (14) formée à partir des lamelles (14a-14c).

7. Dispositif d'encliquetage par serrage selon l'une des revendication 1 à 5, dans lequel le contour de serrage (18') est formé sur la surface intérieure de la bague extérieure (12) formée à partir des lamelles (12a-12f).

8. Dispositif d'encliquetage par serrage selon l'une des revendications précédentes, ayant la forme d'un frein à roue libre ayant un élément de libération (36 ; 50 ; 58) muni de mâchoires (38 ; 52 ; 60) qui s'engage dans des interstices entre plusieurs corps de serrage (16 ; 16').

9. Dispositif d'encliquetage par serrage selon la revendication 8, dans lequel l'élément de libération (36) est formé par un ou plusieurs disques (36a, 36b) qui se situent entre les lamelles (12a-12f) de la bague extérieure.

10. Dispositif d'encliquetage par serrage selon l'une des revendications précédentes, dans lequel les lamelles de la bague intérieure (14 ; 14') comportent des rainures de clavette (72) sur la surface périphérique intérieure qui sont en prise avec des clavettes (22 ; 74) d'un arbre (24 ; 24') qui traverse la bague intérieure.

11. Procédé de fabrication d'un dispositif d'encliquetage par serrage selon l'une des revendications précédente, **caractérisé en ce que** les lamelles (12a-12f ; 14a-14h) sont poinçonnées à partir d'une tôle et **en ce qu'**une pièce de tôle qui reste à l'intérieur d'une lamelle annulaire (12a) lors du poinçonnage, est utilisée comme ébauche (42) pour poinçonner une autre lamelle (14a) pour le même dispositif d'encliquetage par serrage ou un dispositif d'encliquetage par serrage ayant d'autres dimensions.

12. Mécanisme de réglage pour des sièges de véhicule automobile, **caractérisé par** deux dispositifs d'encliquetage par serrage montés l'un derrière l'autre (10 ; 10') qui sont respectivement formés selon la revendication 8.

13. Mécanisme de réglage selon la revendication 12, dans lequel les lamelles (12') du premier dispositif d'encliquetage par serrage (10') se situent sur l'élément de libération (50) du second dispositif d'encliquetage par serrage (10) et sont fixement reliées les unes aux autres et à cet élément de libération.

14. Mécanisme de réglage selon la revendication 13, dans lequel les dispositifs d'encliquetage par serrage (10, 10') sont placés dans un boîtier commun (44, 46), dans lequel un arbre (24') est supporté de manière rotative, lequel arbre traverse les bagues intérieures (14, 14') des deux dispositifs d'encliquetage par serrage et est fixement relié à la bague intérieure (14) du second dispositif d'encliquetage par serrage (10).

15. Mécanisme de réglage selon la revendication 14, dans lequel l'élément de libération (50) du second dispositif d'encliquetage par serrage (10) et au moins certaines des lamelles de la bague intérieure (12') du premier dispositif d'encliquetage par serrage (10') sont en prise avec l'arbre (24') par l'intermédiaire de rainures de clavette (72) et d'une clavette (74), de telle sorte qu'elles peuvent tourner par rapport à l'arbre (24') sur une plage angulaire limitée.

16. Mécanisme de réglage selon l'une des revendications 12 à 15, dans lequel la bague extérieure (12') du premier dispositif d'encliquetage par serrage (10) est fixement reliée à und adaptateur à levier (54) et est élastiquement maintenue par un premier ressort de rappel (64) dans une position neutre, alors que l'élément de libération (58) de ce dispositif d'encliquetage par serrage est élastiquement maintenu dans la position neutre par un second ressort de rappel (66).
